# EUROPEAN PATENT APPLICATION

(11) **EP 4 648 374 A1**
(43) Date of publication of application: **12.11.2025**
(21) Application number: 24753595.8
(22) Date of filing: 06.02.2024
(51) Int. Cl.: H04L 41/0894, H04L 12/14, H04L 67/14, H04W 4/24

(54) **METHOD FOR ROAMING SESSION MANAGEMENT BASED ON CHARGING LIMIT FOR EDGE COMPUTING SERVICES**

(30) Priority: 10.02.2023 KR 20230017847
(71) Applicant: Samsung Electronics Co., Ltd., Suwon-si, Gyeonggi-do 16677 (KR)
(72) Inventor: KIM, Hyesung, Suwon-si, Gyeonggi-do 16677 (KR); LEE, Jicheol, Suwon-si, Gyeonggi-do 16677 (KR)
(74) Representative: Gulde & Partner
(86) International application number: PCT/KR2024/001720
(87) International publication number: WO 2024/167270

(57) **Abstract**

The present disclosure relates to a 5G or 6G communication system for supporting higher data transmission rates. According to an embodiment of the present invention, disclosed is a method whereby an H-PCF controls a spending limit for a roaming terminal in a wireless communication system. The method may comprise the steps of: receiving, from a home-session management function (H-SMF), a request for policy information on a home routed-session breakout (HR-SBO) session related to a home routing packet data unit (PDU) session; obtaining the policy information on the HR-SBO session through a unified data repository (UDR); transmitting, to a home-charging function (H-CHF), a request for information related to a spending limit for the HR-SBO session; receiving, from the H-CHF, policy counter status information on the home routing PDU session and policy counter status information on the HR-SBO session; and transmitting a home routing session management policy to the H-SMF.

## Description

### [Technical Field]

The disclosure relates to a wireless communication system and, more specifically, the disclosure proposes a method for supporting spending limit control for a roaming terminal using an edge computing service in a mobile communication system.

### [Background Art]

5G mobile communication technologies define broad frequency bands to enable high transmission rates and new services, and can be implemented not only in "Sub 6GHz" bands such as 3.5GHz, but also in "Above 6GHz" bands referred to as mmWave including 28GHz and 39GHz. In addition, it has been considered to implement 6G mobile communication technologies (referred to as Beyond 5G systems) in terahertz bands (e.g., 95GHz to 3THz bands) in order to accomplish transmission rates fifty times faster than 5G mobile communication technologies and ultra-low latencies one-tenth of 5G mobile communication technologies.

In the initial stage of 5G mobile communication technologies, in order to support services and to satisfy performance requirements in connection with enhanced Mobile BroadBand (eMBB), Ultra Reliable & Low Latency Communications (URLLC), and massive Machine-Type Communications (mMTC), there has been ongoing standardization regarding beamforming and massive MIMO for alleviating radio-wave path loss and increasing radio-wave transmission distances in mmWave, numerology (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for large-capacity data transmission and a polar code for highly reliable transmission of control information, L2 pre-processing, and network slicing for providing a dedicated network customized to a specific service.

Currently, there are ongoing discussions regarding improvement and performance enhancement of initial 5G mobile communication technologies in view of services to be supported by 5G mobile communication technologies, and there has been physical layer standardization regarding technologies such as Vehicle-to-everything (V2X) for aiding driving determination by autonomous vehicles based on information regarding positions and states of vehicles transmitted by the vehicles and for enhancing user convenience, New Radio Unlicensed (NR-U) aimed at system operations conforming to various regulation-related requirements in unlicensed bands, NR UE Power Saving, Non-Terrestrial Network (NTN) which is UE-satellite direct communication for securing coverage in an area in which communication with terrestrial networks is unavailable, and positioning.

Moreover, there has been ongoing standardization in wireless interface architecture/protocol fields regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service fields regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

If such 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting Augmented Reality (AR), Virtual Reality (VR), Mixed Reality (MR), etc., 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for securing coverage in terahertz bands of 6G mobile communication technologies, Full Dimensional MIMO (FD-MIMO), multi-antenna transmission technologies such as array antennas and large-scale antennas, metamaterial-based lenses and antennas for improving coverage of terahertz band signals, high-dimensional space multiplexing technology using Orbital Angular Momentum (OAM), and Reconfigurable Intelligent Surface (RIS), but also full-duplex technology for increasing frequency efficiency of 6G mobile communication technologies and improving system networks, Al-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation capability by utilizing ultra-high-performance communication and computing resources.

Previously, when performing a home routed session breakout to apply an edge computing service to a home-routed roaming terminal, spending limit control for a home-routed session could only be performed for the entire home-routed PDU session. As a result, there was a disadvantage in that charging monitoring and spending limit control could not be conducted for sessions branched from the home-routed session.

### [Disclosure]

### [Technical Problem]

An aspect of the disclosure is to propose a method for performing separate spending limit control for the branched session when performing a home routed session breakout to apply an edge computing service to a home-routed roaming terminal.

For example, a separate charging policy for an edge computing service used during roaming may be configured through an agreement between an HPLMN operator and a VPLMN operator, and spending limit control, which involves QoS degradation or suspension of an edge computing service during roaming, may be performed based on real-time charging conditions. To perform such spending limit control on an edge computing service for a home-routed roaming terminal, the disclosure proposes a method for separately performing charging monitoring and spending limit control policy configuration and application for sessions branched from a home-routed session through which edge computing service traffic is transmitted.

### [Technical Solution]

According to an embodiment of the disclosure, a method by which an H-PCF controls a spending limit for a terminal in a roaming state may include: receiving, from a home - session management function (H-SMF), a request for policy information for a home routed - session breakout (HR-SBO) session related to a home-routed packet data unit (PDU) session; obtaining the policy information for the HR-SBO session through a unified data repository (UDR); transmitting a request for information related to a spending limit for the HR-SBO session to a home - charging function (H-CHF); receiving, from the H-CHF, policy counter status information for the home-routed PDU session and policy counter status information for the HR-SBO session; and transmitting a home-routed session management policy to the H-SMF, wherein the home-routed session management policy may include a session management policy for the HR-SBO session.

The method of the H-PCF may further include: receiving updated policy counter status information for the HR-SBO session from the H-CHF; based on the updated policy counter status information, determining whether a policy change is needed for the HR-SBO session; and, in case that the policy change is determined to be needed for the HR-SBO, generating an update policy for the HR-SBO session and transmitting the update policy to the H-SMF.

The method of the H-PCF may further include determining whether to consider policy counter information in deciding a policy to be applied to the HR-SBO session, based on the HR-SBO session policy information received from the UDR.

The request for the policy information for the HR-SBO session may include at least one of a visited public land mobile network (VPLMN) identifier, a data network name (DNN), single - network slice selection assistance information (S-NSSAI), or HR-SBO support information.

The policy information for the HR-SBO session, obtained via the UDR, may include information on whether a policy decision based on policy counter status information needs to be performed, information about a policy to be performed based on the policy counter status information, or information about an identifier for the H-CHF or an address of the H-CHF.

According to an embodiment of the disclosure, a method by which an H-SMF controls a spending limit for a terminal in a roaming state may include: receiving a PDU session establishment request message including information about home routed - session breakout (HR-SBO) from a visited - session management function (V-SMF); transmitting, to a home - policy control function (H-PCF), a request for policy information for an HR-SBO session related to a home-routed packet data unit (PDU) session; receiving a home-routed session management policy including a session management policy for the HR-SBO session from the H-PCF; and transmitting a PDU session establishment response message including the session management policy for the SR-SBO session to the V-SMF.

The method of the H-SMF may further include: receiving a usage amount monitoring result for the HR-SBO session from the V-SMF; and transmitting the usage amount monitoring result to a home - charging function (H-CHF).

The method of the H-SMF may further include: receiving an update policy for the HR-SBO session; and determining whether the update policy needs to be applied to the entire home-routed PDU session or to the HR-SBO session.

### [Advantageous Effects]

According to an embodiment of the disclosure, when providing edge computing services to a roaming terminal, spending limit control for edge computing service traffic may be performed.

According to an embodiment of the disclosure, when performing spending limit control for a roaming terminal, the usage amount of traffic transmitted to a local data network of a VPLMN through a home routed session breakout may be considered.

### [Description of Drawings]

FIG. 1 illustrates an example of a 5G system architecture supporting home-routed roaming.
FIG. 2 illustrates an example of configuring a user plane path for supporting an edge computing service of a roaming terminal.
FIGS. 3A and 3B are flowcharts of an embodiment in which an HR-SBO session policy is decided and applied in consideration of a spending limit.
FIGS. 4A and 4B are flowcharts of another embodiment in which an HR-SBO session policy is decided and applied in consideration a spending limit.
FIG. 5 illustrates a structure of a UE according to an embodiment of the disclosure.
FIG. 6 illustrates a structure of a network entity according to an embodiment of the disclosure.

### [Mode for Invention]

Hereinafter, the operation principle of the disclosure will be described in detail in conjunction with the accompanying drawings. In addition, a detailed description of known functions or configurations that may make the subject matter of the disclosure unclear will be omitted. The terms which will be described below are terms defined in consideration of the functions in the disclosure, and may be different according to users, intentions of the users, or customs. Therefore, the definitions of the terms should be made based on the contents throughout the specification.

In the following description, terms for identifying access nodes, terms referring to network entities, terms referring to messages, terms referring to interfaces between network entities, terms referring to various identification information, and the like are illustratively used for the sake of descriptive convenience. Therefore, the disclosure is not limited by the terms as described below, and other terms referring to subjects having equivalent technical meanings may also be used.

In the following description of the disclosure, terms and names defined in 5GS and NR standards, which are the standards specified by the 3rd generation partnership project (3GPP) group among the existing communication standards, will be used for the sake of descriptive convenience. However, the disclosure is not limited by these terms and names, and may be applied in the same way to systems that conform other standards. For example, the disclosure may be applied to the 3GPP 5GS/NR (5th generation mobile communication standards).

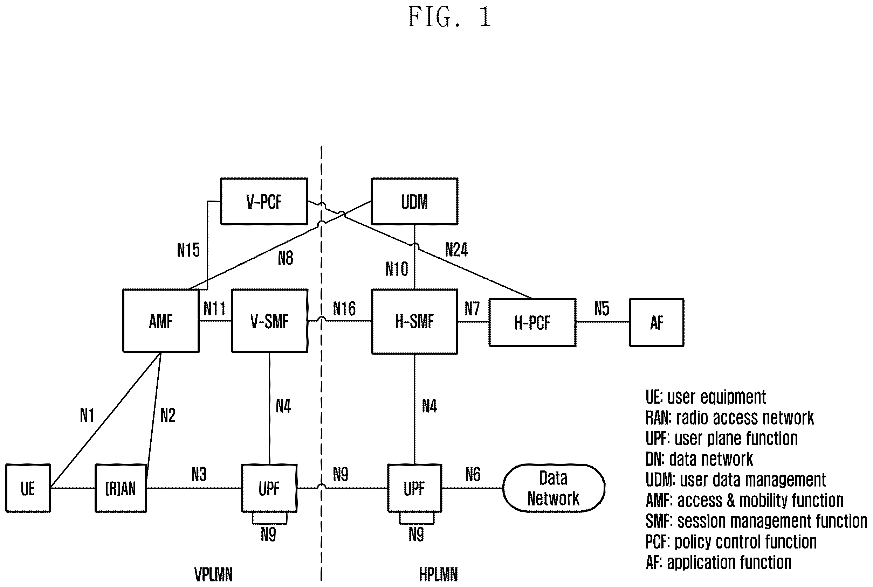

FIG. 1 illustrates an example of a 5G system architecture that supports home-routed roaming.

A 5G system architecture that supports HR roaming may include various network functions (NFs), and FIG. 1 illustrates an access and mobility management function (AMF), a session management function (SMF), a policy control function (PCF), an application function (AF), a unified data management (UDM), a data network (DN), a user plane function (UPF), a (radio) access network ((R)AN), a user equipment (UE), and the like, which correspond to some of these functions.

Each NF supports the following function.
- The AMF provide a function for access and mobility management on a per UE basis, and by default, one UE may be connected to one AMF. V-AMF means the AMF of a visited network, based on a UE subscriber. H-AMF means the AMF of a home network of a UE subscriber.
- The DN refers to, for example, an operator service, Internet access, or a third-party service. The DN transmits a downlink protocol data unit (PDU) to the UPF, or receives, from the UPF, a PDU transmitted from the UE.
- The PCF receives information about packet flow from an application server and provides a function of deciding policies such as mobility management and session management. Specifically, the PCF supports functions such as supporting a unified policy framework for controlling network operations, providing policy rules so that the control plane function(s) (e.g., AMF, SMF, etc.) can enforce the policy rules, and implementing a front end to access relevant subscription information for policy decisions within a unified data repository (UDR).
- The SMF provides a session management function, and when a UE has multiple sessions, the session may be managed by different SMFs. V-SMF means the AMF of a visited network, based on the UE subscriber. H-SMF means the SMF of a home network of a UE subscriber.
- UDM stores a user's subscription data, policy data, and the like.
- The UPF transits a downlink PDU received from the DN to a UE via the (R)AN, and an uplink PDU received from the UE to the DN via the (R)AN.
- AF interacts with a 3GPP core network for service providing (e.g., supporting features such as application influence on traffic routing, access to network capability exposure, and interaction with a policy framework for policy control).
- The CHF provides the SMF with charging information for a mobile communication network (including a service to be charged, the type of charging, and whether restrictions are applied to service use based on usage amount).
- The EASDF processes domain name system queries transmitted by a UE, based on rules received from the SMF. For example, the EASDF may perform operations such as transferring a DNS query transmitted by the UE to a DNS server, receiving a DNS response, transmitting relevant reporting to the SMF, and providing the DNS response to the UE.

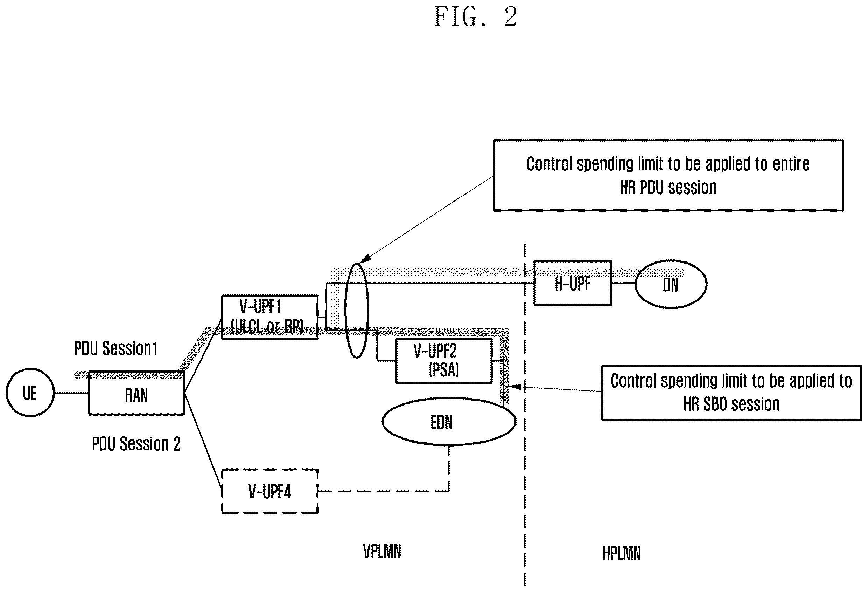

FIG. 2 illustrates an example of configuring a user plane path for supporting an edge computing service of a roaming UE. As shown in the path of PDU Session 1 in FIG. 2, there is a method for supporting local access to an edge data network (EDN, or a local part of data network, or local data network) by branching the HR roaming PDU session of a roaming UE. Furthermore, as shown in the path of PDU Session 2 in FIG. 2, there is a method by which the roaming UE may establish a separate PDU session for a local breakout session to support local access to the edge data network. The primary target scenario of the disclosure is a situation where PDU Session 1 in FIG. 2 is used to support an edge computing service. The usage amount of traffic transmitted through V-UPF1 and V-UPF2 along the transmission path of PDU Session 1 is calculated as the amount of edge computing service used by a home-routed roaming UE. Therefore, when spending limit control for an edge computing service provided to the roaming UE is to be applied, it is necessary to distinguish the traffic transmitted through the path of V-UPF2 from the traffic transmitted through the path of H-UPF to monitor whether a subscriber's spending limit has been reached. In general, whether the spending limit has been reached cannot be independently determined by an SMF and a PCF, and a CHF monitors whether the spending limit has been reached. In the CHF, spending limit reached status information can be expressed as information about policy counter status (e.g., amount spent per day), and the CHF may provide the information to the PCF or the SMF.

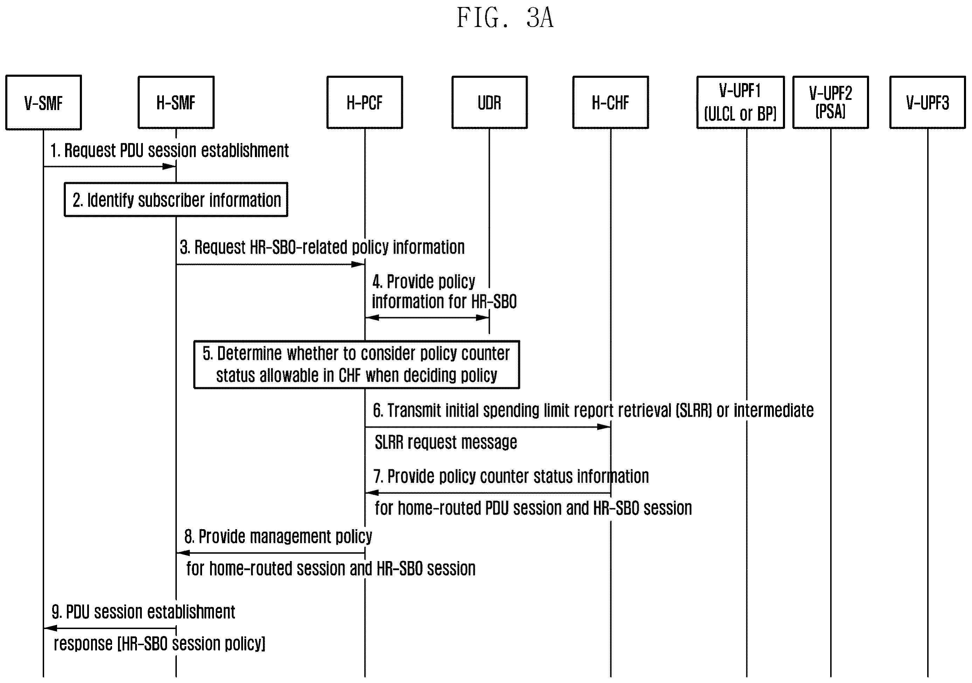

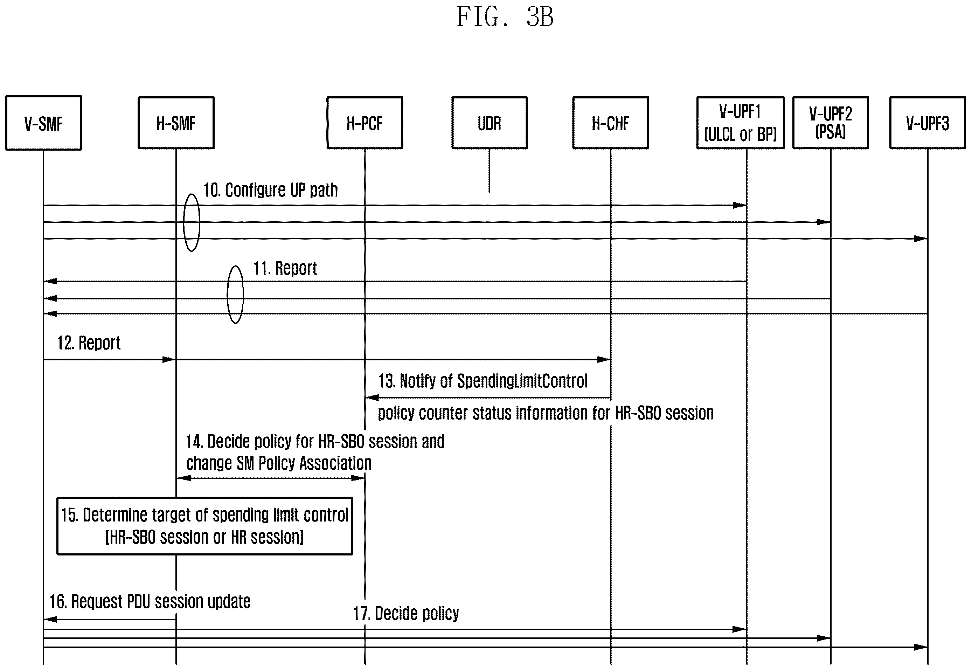

FIGS. 3A and 3B are flowcharts of one embodiment in which an HR-SBO session policy is decided and applied in consideration of a spending limit.
1. A V-SMF receives a PDU session establishment request message transmitted from a UE and transferred via an AMF, and transmits the PDU session establishment request message to an H-SMF to establish a home-routed PDU session. The PDU session establishment request message may contain UE ID, DNN, S-NSSAI, and home routed session breakout (HR-SBO) support or allowance information.
2. The H-SMF identifies the home routed session breakout support or allowance information received from the V-SMF and subscriber information of the UE and performs HR-SBO authorization for the UE and the VPLMN to determine whether to allow a home routed session breakout.
3. When it is identified, in step 2, that HR-SBO is authorized, the H-SMF may request HR-SBO-related policy information from an H-PCF. The operation may be performed by transmitting a Session Management Policy Association Establishment request message. The message may include a VPLMN identifier, DNN, S-NSSAI, or information indicating that support of HR-SBO is authorized.
4. The H-PCF obtains policy information for the HR-SBO (information related to performing policy decision) from a UDR in consideration of the information (such as UE ID, VPLMN ID, HR-SBO authorization information, DNN, or S-NSSAI) received from the H-SMF. The policy information provided by the UDR may include information about whether a spending limit or a policy counter status, which may indicate whether the spending limit has been reached, should be considered when performing a policy decision for a home-routed PDU session that has been requested to be established for a specific VPLMN, DNN, and S-NSSAI. Furthermore, the UDR may provide the H-PCF with information about whether a policy decision based on a spending limit or policy counter status for the HR-SBO session needs to be performed when an HR-SBO session is performed for the home-routed PDU session, and about a policy (e.g., QoS control, HR-SBO session release control, etc.) that should be performed based on the policy counter status, spending limit information for the HR-SBO session, etc. Furthermore, the UDR may provide H-CHF identifier and address information to the PCF. If the H-CHF identifier and address information is not provided by the UDR, the PCF shall use internally configured H-CHF information or find, through an NRF, H-CHF identifier and address information that can provide policy counter status information for an HR-SBO session to be established in a VPLMN in which the UE is roaming.
   To support the above operation, subscriber spending limit control information (information indicating whether a policy based on a spending limit should be applied to the UE) must be stored in the UDR for each specific VPLMN ID, and information about whether separate spending limit control is applied to an HR-SBO session for the specific VPLMN ID should also be stored. This spending limit control information may be stored in the UDR differently depending on VPLMN ID and DNN/S-NSSAI.
5. The H-PCF may determine to consider the policy counter status information when performing a policy decision that should be applied to the HR-SBO session established for the specific VPLMN ID, DNN, or S-NSSAI, based on the information received from the UDR in the previous step.
6. The H-PCF transmits an initial spending limit report retrieval request message or an intermediate spending limit report retrieval request message to an H-CHF to obtain policy counter status information or spending limit information according to a policy counter status. The request message may include UE ID (SUPI or GPSI), VPLMN ID, DNN, S-NSSAI, HR-SBO session authorization information, policy counter change event ID, event reporting information (continuous reporting), etc.
7. The H-CHF may provide the H-PCF with policy counter status information for the home-routed PDU session and policy counter status (HR-SBO policy counter status) information for the HR-SBO session of the home-routed PDU session separately. The policy counter status information for the HR-SBO session may include a policy counter status, a spending limit based on the policy counter status, a policy counter ID, activation time, etc. For example, the HR-SBO policy counter status may be determined by an operator, and may include usage charge information (e.g., the amount charged for the HR-SBO session during a day) and limit usage charge information (e.g., the maximum daily charge for the HR-SBO session) for an HR-SBO session service within a specific time range.
8. The H-PCF transmits a home-routed session management policy to the H-SMF. In this case, the H-PCF may generate a session management policy for the HR-SBO session in consideration of the policy counter status information received from the H-CHF, and provide the generated session management policy to the H-SMF as part of the home-routed session management policy. However, when a session management policy for an HR-SBO session is established by the H-PCF, the session management policy that should be applied only to the HR-SBO session and distinct from a session management policy that should be applied to the entire home-routed PDU session is provided to the H-SMF. For example, through distinction using PLMN ID, a session management policy that should be applied to the entire home-routed PDU session may be mapped to a HPLMN ID and provided, while a session management policy that should be applied to an HR-SBO session may be mapped to a VPLMN ID or HR-SBO indicator and provided. In order to perform a policy decision based on the policy counter status information for an HR-SBO session, the H-PCF may additionally provide the H-SMF with monitoring performance information for the HR-SBO session in the VPLMN. The monitoring performance information for the HR-SBO session may include VPLMN ID and usage monitoring control-related information, such as monitoring key, monitoring time, volume threshold, or time threshold.
9. The H-SMF configures the policy, which should be applied to the entire home-routed session among the home-routed session management policies received from the H-PCF, on an H-UPF, and transmits, to the V-SMF, the policy that should be applied to the HR-SBO session.
10. The V-SMF configures the policy for the HR-SBO session received from the H-SMF on V-UPF1, which acts as an Uplink Classifier (ULCL) or a branching point (BP), and V-UPF2, which acts as a PDU Session Anchor (PSA) for the HR-SBO session. In addition, the V-SMF configures policy information for monitoring the usage amount of the entire home-routed session, rather than the HR-SBO session, on V-UPF3 which is connected to the H-UPF. The UPF deployment scenario illustrated in FIGS. 3A and 3B is an example, and V-UPF3 may not exist separately and V-UPF1, which acts as a ULCL, may be directly connected to the H-UPF.
11. V-UPF1, V-UPF2, and V-UPF3 monitor a usage amount according to the policies received from the V-SMF and report the usage amount to the V-SMF.
12. The V-SMF transmits, to the H-SMF, usage amount monitoring results for HR-SBO received from V-UPF1 and V-UPF2. Furthermore, the H-SMF provides the usage amount monitoring results for the HR-SBO received from the V-SMF to the H-CHF so that the H-CHF can calculate whether a spending limit for the HR-SBO has been reached or a policy counter status. The H-SMF may provide the H-CHF with both a usage amount monitoring result for the HR-SBO received from the H-PCF and a usage amount monitoring result for a home-routed session received from the H-UPF.
13. The H-CHF calculates the policy counter status for the HR-SBO session, based on the usage amount of the HR-SBO session, and transmits, to the H-PCF, a spending limit control notification which includes information about a policy counter status change value or whether the spending limit has been reached. Furthermore, the H-CHF may provide the H-PCF with policy counter status change information for the entire home-routed PDU session. Furthermore, in consideration of both a usage amount monitoring value for the HR-SBO received from the H-SMF and a usage amount monitoring value for a home-routed session (which is a path transmitted to a data network via the H-UPF), the H-CHF may determine the usage amount of the entire home-routed PDU session and update the policy counter status.
14. When it is determined that the policy counter status for the HR-SBO session received from the H-CHF has reached the spending limit, the H-PCF performs a policy decision to generate a new policy for the HR-SBO session for performing spending limit control for the HR-SBO session, and transmits an updated policy to the H-SMF through the SM Policy Association Modification procedure. In the previous step, the H-PCF may be provided with both the policy counter status for the HR-SBO session and the policy counter status for the entire home-routed PDU session, and may separately determine whether to perform spending limit control for the HR-SBO session and the entire home-routed PDU session. An HR-SBO session-related policy for performing spending limit control for the HR-SBO session may be mapped to a VPLMN ID and provided to the H-SMF.
   The policy decision to perform spending limit control for the HR-SBO session may include a new QoS policy (QoS downgrade) or information such as HR-SBO session release indicator and valid time criteria (policy validity period).
15. The H-SMF may determine whether the spending limit control under the new policy received from the H-PCF is for the HR-SBO session or for the entire home-routed PDU session.
16. When the policy received from the H-PCF is for the HR-SBO session, the H-SMF transmits, to the V-SMF, the policy for the HR- SBO session received from the H-PCF in step 15. The policy may be transmitted from the H-SMF to the V-SMF through a PDU session update request message.
17. The V-SMF performs the policy received from the H-SMF in step 16. For example, when the policy information received from the H-SMF includes a new QoS policy, the V-SMF may provide the corresponding QoS parameter to the UPF. Alternatively, when the policy information received from the H-SMF includes an HR-SBO session release indicator, the V-SMF may update UP path configuration for V-UPF3 (configure V-UPF3 to be directly connected to the RAN) and release V-UPF1 and V-UPF2 in order to remove V-UPF1 acting as a ULCL and V-UPF2 acting as a PSA for the HR-SBO session.

In addition to the operations described through the embodiment of the disclosure illustrated in FIGS. 3A and 3B, the H-PCF may stop receiving a notification related to spending limit control from the H-CHF when specific conditions are met. For example, when the V-SMF or the H-SMF determines to release the HR-SBO session due to the occurrence of a network operational issue unrelated to the spending limit (e.g., the occurrence of network congestion, network function overload, or a notification from the UDM regarding HR-SBO authentication/authorization cancellation due to change in user subscriber information), the V-SMF or the H-SMF may notify the H-PCF of the occurrence of an HR-SBO session release event. When the V-SMF determine to release the HR-SBO session, the V-SMF notifies the H-SMF of the HR-SBO session release, and the H-SMF may notify the H-PCF of the occurrence of an HR-SBO session release event. Alternatively, the H-SMF may determine to release the HR-SBO session, notify the H-PCF of the occurrence of an HR-SBO session release event, and transmit an HR-SBO session release performance request to the V-SMF. The H-PCF, which is notified of the occurrence of the HR-SBO session release event, may determine that the spending limit control for the HR-SBO is no longer required, and may transmit, to the H-CHF, a request for stopping the notification related to the spending limit control (a request for stopping the notification for the spending limit control that is performed in step 13 of FIG. 3B and includes information about a policy counter status change value or whether the spending limit has been reached) and HR-SBO session release event occurrence information. The H-CHF may stop performing the spending limit control notification in response to the request of the H-PCF.

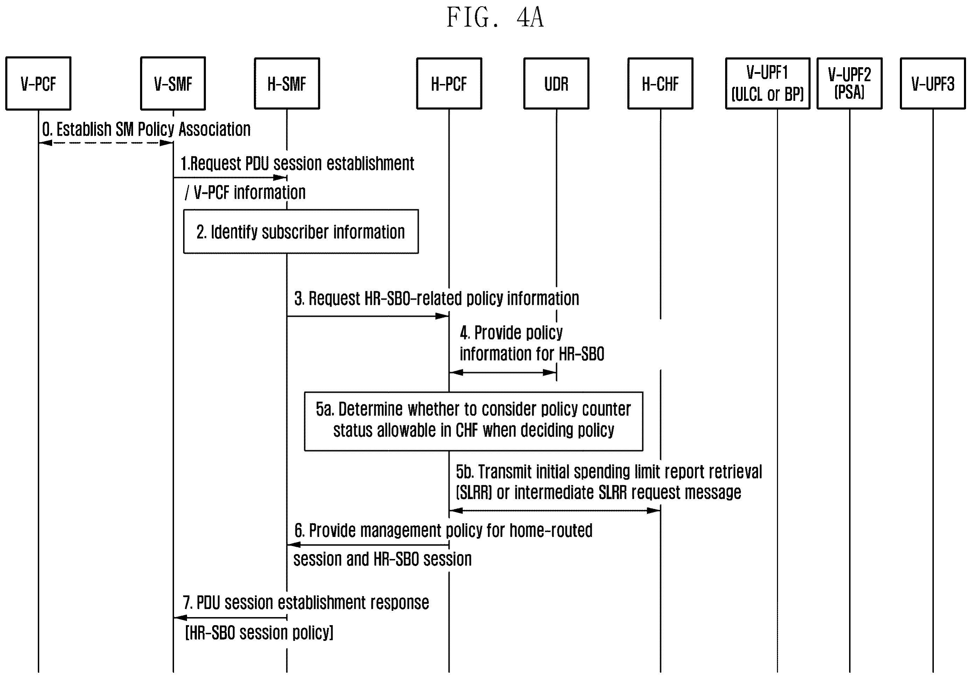

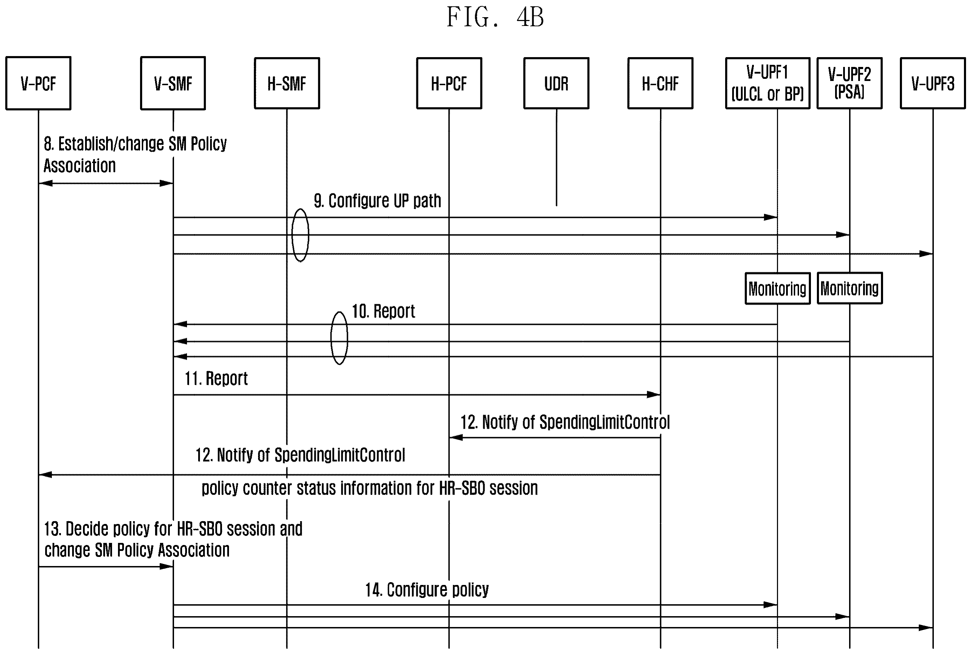

FIGS. 4A and 4B are flowcharts of another embodiment in which an HR-SBO session policy is decided and applied in consideration of a spending limit.

0. A V-SMF may receive a PDU session establishment request message which is transmitted from a UE and transferred through an AMF, and may perform the Session Management Policy Association Establishment with a V-PCF to obtain a session management policy for a home-routed roaming session.

The V-SMF transmits a home-routed PDU session establishment request message to an H-SMF. The PDU session establishment request message may include UE ID, DNN, S-NSSAI, home routed session breakout (HR-SBO) support or allowance information, V-PCF identifier and address information, V-CHF identifier and address information, etc.

2. The H-SMF identifies the home routed session breakout support or allowance information received from the V-SMF and subscriber information of the UE and performs HR-SBO authorization for the UE and a VPLMN to determine whether to allow the session breakout.

3. When it is identified, in step 2, that HR-SBO support is authorized, the H-SMF may request HR-SBO-related policy information from an H-PCF. The operation may be performed by transmitting a Session Management Policy Association Establishment request message. The message may include a VPLMN identifier, DNN, S-NSSAI or information indicating that HR-SBO support is authorized, V-PCF identifier and address information, or V-CHF identifier and address information.

4. The H-PCF obtains policy information for HR-SBO (information related to performing policy decision) from a UDR in consideration of the information (such as UE ID, VPLMN ID, HR-SBO authorization information, DNN, or S-NSSAI) received from the H-SMF. The policy information provided by the UDR may include information about whether a spending limit or a policy counter status, which may indicate whether the spending limit has been reached, should be considered when performing a policy decision for a home-routed PDU session that has been requested to be established for a specific VPLMN, DNN, and S-NSSAI. Furthermore, the UDR may provide the H-PCF with, information about whether a policy decision based on a spending limit or policy counter status for the HR-SBO session needs to be performed when an HR-SBO session is performed for the home-routed PDU session, and about a policy (e.g., QoS control, HR-SBO session release control, etc.) that should be performed based on the policy counter status, spending limit information for the HR-SBO session, etc. If H-CHF identifier and address information is not provided by the UDR, the PCF shall use internally configured H-CHF information or find, through an NRF, H-CHF identifier and address information that can provide policy counter status information for an HR-SBO session to be established in a VPLMN in which the UE is roaming.

To support the above operation, subscriber spending limit control information (information indicating whether a policy based on a spending limit should be applied to the UE) must be stored in the UDR for each specific VPLMN ID, and information about whether separate spending limit control is applied to an HR-SBO session for the specific VPLMN ID should also be stored. This spending limit control information may be stored in the UDR differently depending on VPLMN ID and DNN/S-NSSAI.

5a. The H-PCF may determine to consider the policy counter status information when performing a policy decision that should be applied to the HR-SBO session established for the specific VPLMN ID, DNN, or S-NSSAI, based on the information received from the UDR in the previous step.

5b. The H-PCF transmits an initial spending limit report retrieval request or intermediate spending limit report retrieval request message to the H-CHF to obtain policy counter status information or spending limit information according to a policy counter status. The request message may include UE ID (SUPI or GPSI), VPLMN ID, DNN, S-NSSAI, HR-SBO session authorization information, policy counter change event ID, event reporting information (continuous reporting), V-PCF identifier and address information, V-CHF identifier and address information, etc. The V-PCF address information may be configured and provided as a notification target address for spending limit reporting. The H-CHF may provide the H-PCF with policy counter status information for a corresponding home-routed PDU session and policy counter status information for an HR-SBO session of the home-routed PDU session (HR-SBO policy counter status) separately. The policy counter status information for the HR-SBO session may include policy counter status, spending limit based on policy counter status, policy counter ID, activation time, etc. For example, the HR-SBO policy counter status may be determined by an operator, and may include usage charge information (e.g., the amount charged for the HR-SBO session during a day) and limit usage charge information (e.g., the maximum daily charge for the HR-SBO session) for an HR-SBO session service within a specific time range.

6. The H-PCF transmits a home-routed session management policy to the H-SMF. In this case, the H-PCF may generate a session management policy for the HR-SBO session in consideration of the policy counter status information received from the H-CHF, and provide the generated session management policy to the H-SMF as part of the home-routed session management policy. However, when a session management policy for an HR-SBO session is established by the H-PCF, the session management policy that should be applied only to the HR-SBO session and distinct from a session management policy that should be applied to the entire home-routed PDU session is provided to the H-SMF. For example, through distinction using PLMN ID, a session management policy that should be applied to the entire home-routed PDU session may be mapped to a HPLMN ID and provided, while a session management policy that should be applied to an HR-SBO session may be mapped to a VPLMN ID or HR-SBO indicator and provided. In order to perform a policy decision based on the policy counter status information for an HR-SBO session, the H-PCF may additionally provide the H-SMF with monitoring performance information for the HR-SBO session in the VPLMN. The monitoring performance information for the HR-SBO session may include VPLMN ID and usage monitoring control-related information, such as monitoring key, monitoring time, volume threshold, or time threshold.

7. The H-SMF configures the policy, which should be applied to the entire home-routed session among the home-routed session management policies received from the H-PCF, on an H-UPF, and transmits, to the V-SMF, the policy that should be applied to the HR-SBO session.

8. The V-SMF may perform the SM Policy Association Establishment/Modification procedure with the V-PCF. The V-SMF may provide the V-PCF with information about whether spending limit control is applied to the HR-SBO session, policy counter status information, and H-CHF information.

9. The V-SMF configures the policy for the HR-SBO session received from the H-SMF on V-UPF1, which acts as an Uplink Classifier (ULCL) or a branching point (BP), and V-UPF2, which acts as a PDU Session Anchor (PSA) for the HR-SBO session. In addition, the V-SMF configures policy information for monitoring the usage amount of the entire home-routed session, rather than the HR-SBO session, on V-UPF3 which is connected to the H-UPF. The UPF deployment scenario illustrated in FIGS. 4A and 4B is an example, and V-UPF3 may not exist separately and V-UPF1, which acts as a ULCL, may be directly connected to the H-UPF.

10. V-UPF1, V-UPF2, and V-UPF3 monitor a usage amount according to the policies received from the V-SMF and report the usage amount to the V-SMF.

11. The V-SMF transmits, to the H-SMF, usage amount monitoring results for HR-SBO received from V-UPF1 and V-UPF2. Furthermore, the H-SMF provides the usage amount monitoring results for the HR-SBO received from the V-SMF to the H-CHF so that the H-CHF can calculate whether a spending limit for the HR-SBO has been reached or a policy counter status. The H-SMF may provide the H-CHF with both a usage amount monitoring result for the HR-SBO received from the H-PCF and a usage amount monitoring result for a home-routed session received from the H-UPF.

12. The H-CHF may calculate the policy counter status for the HR-SBO session, based on the usage amount of the HR-SBO session, and transmit, to the H-PCF and the V-PCF, a spending limit control notification including information about a policy counter status change value or whether the spending limit has been reached. Furthermore, the H-CHF may provide the H-PCF with policy counter status change information for the entire home-routed PDU session.

Note: In consideration of both a usage amount monitoring value for the HR-SBO received from the H-SMF and a usage amount monitoring value for the home-routed session (which is a path transmitted to a data network through the H-UPF), the H-CHF may determine the usage amount of the entire home-routed PDU session and update the policy counter status.

13. When it is determined that the policy counter status for the HR-SBO session received from the H-CHF has reached the spending limit, the V-PCF performs a policy decision to generate a new policy for the HR-SBO session for performing spending limit control for the HR-SBO session, and transmits an updated policy to the V-SMF through the SM Policy Association Modification procedure. In the previous step, the V-PCF may be provided with the policy counter status for the policy counter status for the HR-SBO session, and may determine whether to perform spending limit control for the HR-SBO session. An HR-SBO session-related policy for performing spending limit control for the HR-SBO session may be mapped to a VPLMN ID and provided to the V-SMF.

The policy decision to perform spending limit control for the HR-SBO session may include a new QoS policy (QoS downgrade) or information such as HR-SBO session release indicator and valid time criteria (policy validity period).

14. The V-SMF performs the policy received from the V-PCF in the previous procedure. For example, when the policy information received from the V-PCF includes a new QoS policy, the V-SMF may provide a corresponding QoS parameter to the UPF. Alternatively, when the policy information received from the V-PCF includes an HR-SBO session release indicator, the V-SMF may update a UP path configuration for V-UPF3 (configure V-UPF3 to be directly connected to an RAN) and release V-UPF1 and V-UPF2, in order to remove V-UPF1 acting as a ULCL and V-UPF2 acting as a PSA for the HR-SBO session.

In addition to the operations described through the embodiment of the disclosure illustrated in FIGS. 4A and 4B, the V-PCF or the H-PCF may stop receiving a notification related to spending limit control from the H-CHF when specific conditions are met. For example, when the V-SMF or the H-SMF determines to release the HR-SBO session due to the occurrence of a network operational issue unrelated to the spending limit (e.g., a notification from the UDM regarding HR-SBO authentication/authorization cancellation, the occurrence of network congestion, or network function overload), the V-SMF or the H-SMF may notify the H-PCF of the occurrence of an HR-SBO session release event. The H-PCF, which is notified of the occurrence of the HR-SBO session release event, may determine that the spending limit control for the HR-SBO is no longer required, and may transmit, to the H-CHF, a request for stopping the notification related to the spending limit control (a request for stopping the notification for the spending limit control that is performed in step 12 of FIG. 4B and includes information about a policy counter status change value or whether the spending limit has been reached) and HR-SBO session release event occurrence information. The H-CHF may stop performing the spending limit control notification in response to the request of the H-PCFF.

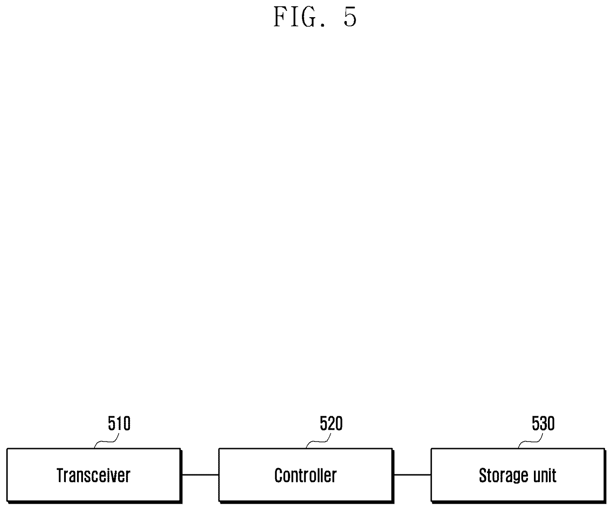

FIG. 5 illustrates a structure of a UE according to an embodiment of the disclosure.

Referring to FIG. 5, the UE may include a transceiver 510, a controller 520, and a storage 530. In the disclosure, the controller may be defined as a circuit or an application-specific integrated circuit or at least one processor.

The transceiver 510 may transmit/receive signals with other network entities. The transceiver 510 may receive, for example, system information, synchronization signals, or reference signals from the base station.

The controller 520 may control the overall operation of the UE according to the embodiments proposed in the disclosure. For example, the controller 520 may control the UE to transmit a PDU session creation request message to a V-SMF via an AMF, and may control the UE to be connected to a specific VPLMN to be provided with roaming service.

The storage 530 may store at least one of information transmitted/received through the transceiver 510 and information generated through the controller 520. For example, the storage 530 may store information on a PDU session for roaming service.

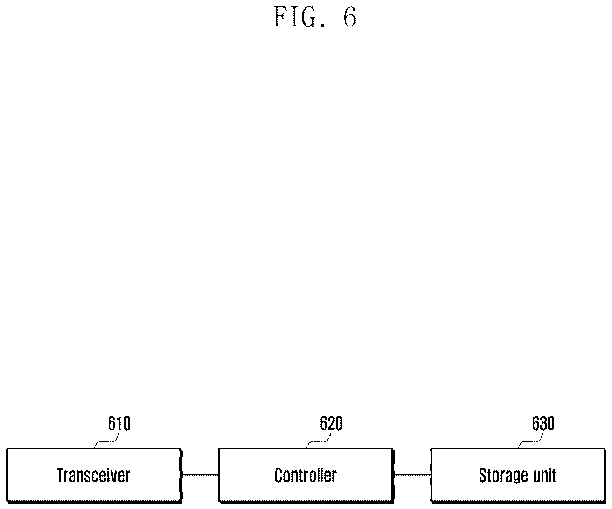

FIG. 6 illustrates a structure of a network entity according to an embodiment of the disclosure.

The network entity of FIG. 6 may refer to one of NFs such as the above-described AMF, DN, PCF, SMF, UDM, UPF, AF, CHF, and EASDF.

Referring to FIG. 6, the network entity may include a transceiver 610, a controller 520, and a storage 630. In the disclosure, the controller may be defined as a circuit or an application-specific integrated circuit or at least one processor.

The transceiver 610 may transmit/receive signals with other network entities. For example, the transceiver 610 may receive signals from UEs or other network entities.

The controller 620 may control the overall operation of the network entity according to the embodiments proposed in the disclosure. Specifically, the controller 620 may control signal flows between the respective blocks so as to perform the operations in the flowcharts of FIGS. 3 and 4.

The storage 630 may store at least one of information transmitted/received through the transceiver 610 and information generated through the controller 620. For example, the storage 630 may store spending limit or policy counter status-related information for an HR-SBO session, policy information to be performed based on the policy counter status, and the like.

The embodiments of the disclosure described and shown in the specification and the drawings are merely specific examples that have been presented to easily explain the technical contents of embodiments of the disclosure and help understanding of embodiments of the disclosure, and are not intended to limit the scope of embodiments of the disclosure. It will be apparent to those skilled in the art that, in addition to the embodiments set forth herein, other variants based on the technical idea of the disclosure may be implemented.

## Claims

1. A method, performed by a home - policy control function (H-PCF) in a wireless communication system, for controlling a spending limit for a terminal in a roaming state, the method comprising:
receiving, from a home - session management function (H-SMF), a request for policy information for a home routed - session breakout (HR-SBO) session related to a home-routed packet data unit (PDU) session;
obtaining the policy information for the HR-SBO session through a unified data repository (UDR);
transmitting a request for information related to a spending limit for the HR-SBO session to a home - charging function (H-CHF);
receiving, from the H-CHF, policy counter status information for the home-routed PDU session and policy counter status information for the HR-SBO session; and
transmitting a home-routed session management policy to the H-SMF,
wherein the home-routed session management policy comprises a session management policy for the HR-SBO session.

2. The method of claim 1, further comprising:
receiving updated policy counter status information for the HR-SBO session from the H-CHF;
based on the updated policy counter status information, determining whether a policy change is needed for the HR-SBO session; and
in case that the policy change is determined to be needed for the HR-SBO, generating an update policy for the HR-SBO session and transmitting the update policy to the H-SMF.

3. The method of claim 1, further comprising
determining whether to consider policy counter information in deciding a policy to be applied to the HR-SBO session, based on the HR-SBO session policy information received from the UDR.

4. The method of claim 1, wherein the request for the policy information for the HR-SBO session comprises at least one of a visited public land mobile network (VPLMN) identifier, a data network name (DNN), single - network slice selection assistance information (S-NSSAI), or HR-SBO support information.

5. The method of claim 1, wherein the policy information for the HR-SBO session, obtained via the UDR, comprises at least one of information about whether a policy decision based on policy counter status information needs to be performed, information about a policy to be performed based on the policy counter status information, or information about an identifier for the H-CHF or an address of the H-CHF.

6. A method, performed by a home - session management function (H-SMF) in a wireless communication system, for controlling a spending limit for a terminal in a roaming state, the method comprising:
receiving a PDU session establishment request message comprising information about home routed - session breakout (HR-SBO) from a visited - session management function (V-SMF);
transmitting, to a home - policy control function (H-PCF), a request for policy information for an HR-SBO session related to a home-routed packet data unit (PDU) session;
receiving a home-routed session management policy comprising a session management policy for the HR-SBO session from the H-PCF; and
transmitting a PDU session establishment response message comprising the session management policy for the SR-SBO session to the V-SMF.

7. The method of claim 6, further comprising:
receiving a usage amount monitoring result for the HR-SBO session from the V-SMF; and
transmitting the usage amount monitoring result to a home - charging function (H-CHF).

8. The method of claim 6, further comprising
receiving an update policy for the HR-SBO session from the H-PCF; and
determining whether the update policy needs to be applied to the entire home-routed PDU session or to the HR-SBO session.

9. A home - policy control function (H-PCF) operating for controlling a spending limit for a terminal in a roaming state in a wireless communication system, the H-PCF comprising:
a transceiver; and
a controller,
wherein the controller is configured to:
receive, from a home - session management function (H-SMF), a request for policy information for a home routed - session breakout (HR-SBO) session related to a home-routed packet data unit (PDU) session;
obtain the policy information for the HR-SBO session through a unified data repository (UDR);
transmit a request for information related to a spending limit for the HR-SBO session to a home - charging function (H-CHF);
receive, from the H-CHF, policy counter status information for the home-routed PDU session and policy counter status information for the HR-SBO session; and
transmit a home-routed session management policy to the H-SMF,
wherein the home-routed session management policy comprises a session management policy for the HR-SBO session.

10. The H-PCF of claim 9, wherein the controller is further configured to:
receive updated policy counter status information for the HR-SBO session from the H-CHF;
based on the updated policy counter status information, determine whether a policy change is needed for the HR-SBO session; and
in case that the policy change is determined to be needed for the HR-SBO, generate an update policy for the HR-SBO session and transmit the update policy to the H-SMF.

11. The H-PCF of claim 9, wherein the controller is further configured to determine whether to consider policy counter information in deciding a policy to be applied to the HR-SBO session, based on the HR-SBO session policy information received from the UDR.

12. The H-PCF of claim 9, wherein the request for the policy information for the HR-SBO session comprises at least one of a visited public land mobile network (VPLMN) identifier, a data network name (DNN), single - network slice selection assistance information (S-NSSAI), or HR-SBO support information.

13. A home - session management function (H-SMF) operating for controlling a spending limit for a terminal in a roaming state in a wireless communication system, the H-SMF comprising:
a transceiver; and
a controller,
wherein the controller is configured to:
receive a PDU session establishment request message comprising information about home routed - session breakout (HR-SBO) from a visited - session management function (V-SMF);
transmit, to a home - policy control function (H-PCF), a request for policy information for an HR-SBO session related to a home-routed packet data unit (PDU) session;
receive a home-routed session management policy comprising a session management policy for the HR-SBO session from the H-PCF; and
transmit a PDU session establishment response message comprising the session management policy for the SR-SBO session to the V-SMF.

14. The H-SMF of claim 13, wherein the controller is further configured to:
receive a usage amount monitoring result for the HR-SBO session from the V-SMF; and
transmit the usage amount monitoring result to a home - charging function (H-CHF).

15. The H-SMF of claim 13, wherein the controller is further configured to:
receive an update policy for the HR-SBO session from the H-PCF; and
determine whether the update policy needs to be applied to the entire home-routed PDU session or to the HR-SBO session.
